# EUROPEAN PATENT APPLICATION

(11) **EP 4 322 192 A1**
(43) Date of publication of application: **14.02.2024**
(21) Application number: 22784673.0
(22) Date of filing: 05.04.2022
(51) Int. Cl.: H01H 33/00

(54) **HIGH-SPEED THROWER, POWER CONVERSION DEVICE, AND SWITCHGEAR**

(30) Priority: 09.04.2021 JP 2021066442
(71) Applicant: MITSUBISHI ELECTRIC CORPORATION, Chiyoda-ku Tokyo 100-8310 (JP)
(72) Inventor: TAKEMATSU, Toshihiko, Tokyo 100-8310 (JP); KAI, Takayuki, Tokyo 100-8310 (JP)
(74) Representative: Meissner Bolte Partnerschaft mbB
(86) International application number: PCT/JP2022/017095
(87) International publication number: WO 2022/215691

(57) **Abstract**

A fault current is removed at a higher speed. A high-speed introduction device (100) includes: a connection chamber (3) provided in an insulative container (1); a first electrode (11) and a second electrode (12) disposed to be electrically separated from each other in the connection chamber at least before an introduction operation, each of the first electrode (11) and the second electrode (12) being composed of a conductive material; and an injector (4) to inject at least one of a charged particle and a conductive particle, the injector communicating with the connection chamber, wherein when the introduction operation is started, the injector (4) injects at least one of the charged particle and the conductive particle into the connection chamber.

## Description

### TECHNICAL FIELD

The present disclosure relates to: a high-speed introduction device to be introduced into a fault electrical path in order to remove a fault current when an electrical fault or the like occurs; a power conversion device using the high-speed introduction device; and a switchgear using the high-speed introduction device.

### BACKGROUND ART

A power semiconductor is used for a power conversion device or static synchronous compensator (STATCOM) used for high-voltage DC power transmission or the like, and a high-speed introduction device is present as a device to promptly remove a fault current to protect a system when an electrical fault such as ground fault or short circuit occurs due to a failure or malfunction of an element. Further, the high-speed introduction device is also used for device protection against an internal arc fault in a switchgear installed in a factory, a building, or the like.

In particular, when an arc due to a short-circuit fault is generated inside a device to be protected, temperature and pressure become higher therearound as a time of the generation of arc is longer, thus resulting in an increased risk of severe damage such as breakage of a housing. In order to protect the device from such a damage, it is necessary to promptly remove a fault current when an electrical fault is detected. Therefore, for the high-speed introduction device, a high-speed introduction operation is required at a speed as high as possible after the detection of the electrical fault.

The high-speed introduction device described in PTL 1 includes a fixed contact piece and a movable contact piece with which a piston-cylinder device is combined, wherein an introduction operation for the movable contact piece is performed at a high speed by operating a piston-cylinder device using a gas generator so as to drive the movable contact piece.

### CITATION LIST

### PATENT LITERATURE

PTL 1: Japanese Patent No. 5254340

### SUMMARY OF INVENTION

### TECHNICAL PROBLEM

In the high-speed introduction device described in PTL 1, the fault electrical path is not short-circuited and the fault current is not removed until the fixed contact piece and the movable contact piece are brought into direct contact with each other. In the case of such a configuration in which the electrodes provided to short-circuit the fault electrical path need to be brought into direct contact with each other, it takes a time of about several ms until completion of introduction (here, the completion of introduction means a state in which the electrodes provided to short-circuit the fault electrical path are brought into electrical conduction to short-circuit the fault electrical path).

The present disclosure has been made in view of the above-described problem, and has an object to provide: a high-speed introduction device that can remove a fault current at a higher speed; a power conversion device using the high-speed introduction device; and a switchgear using the high-speed introduction device.

### SOLUTION TO PROBLEM

An embodiment of a high-speed introduction device according to the present disclosure includes: a connection chamber provided in an insulative container; a first electrode and a second electrode disposed to be electrically separated from each other in the connection chamber at least before an introduction operation, each of the first electrode and the second electrode being composed of a conductive material; and an injector to inject at least one of a charged particle and a conductive particle, the injector communicating with the connection chamber, wherein when the introduction operation is started, the injector injects at least one of the charged particle and the conductive particle into the connection chamber.

An embodiment of a power conversion device according to the present disclosure includes: a power module series circuit having a semiconductor switch and an electrical energy storage device connected to the semiconductor switch in parallel; and the above-described high-speed introduction device, wherein the high-speed introduction device is connected between an input terminal and an output terminal of the power semiconductor circuit.

An embodiment of a switchgear according to the present disclosure includes: a bus; and the above-described high-speed introduction device, wherein the high-speed introduction device is provided in the bus.

### ADVANTAGEOUS EFFECTS OF INVENTION

According to the present disclosure, since the above-described features are included, it is possible to provide: a high-speed introduction device that can remove a fault current at a higher speed; a power conversion device using the high-speed introduction device; and a switchgear using the high-speed introduction device.

### BRIEF DESCRIPTION OF DRAWINGS

Fig. 1 is a cross sectional view showing an exemplary high-speed introduction device according to a first embodiment.
Fig. 2 is a cross sectional view showing another exemplary high-speed introduction device according to the first embodiment.
Fig. 3 is an explanatory diagram showing an exemplary introduction operation for the high-speed introduction device according to the first embodiment.
Fig. 4 is a cross sectional view showing an exemplary high-speed introduction device according to a modification 1-1.
Fig. 5 is an explanatory diagram showing an exemplary introduction operation for the high-speed introduction device according to modification 1-1.
Fig. 6 is a cross sectional view showing an exemplary high-speed introduction device according to a modification 1-2.
Fig. 7 is an explanatory diagram showing an exemplary introduction operation for the high-speed introduction device according to modification 1-2.
Fig. 8 is a cross sectional view showing an exemplary high-speed introduction device according to a second embodiment.
Fig. 9 is a cross sectional view showing another exemplary high-speed introduction device according to the second embodiment.
Fig. 10 is an explanatory diagram showing an exemplary discharging path DP formed by an introduction operation for the high-speed introduction device according to the second embodiment.
Fig. 11 is an explanatory diagram showing exemplary discharging paths DP formed by the introduction operation for the high-speed introduction device according to the second embodiment.
Fig. 12 is a cross sectional view showing an exemplary high-speed introduction device according to a modification 2-1.
Fig. 13 is an explanatory diagram showing an exemplary discharging path DP formed by an introduction operation for the high-speed introduction device according to modification 2-1.
Fig. 14 is a cross sectional view showing an exemplary high-speed introduction device according to a third embodiment.
Fig. 15 is an explanatory diagram showing an exemplary introduction operation for the high-speed introduction device according to the third embodiment.
Fig. 16 is a cross sectional view showing another exemplary high-speed introduction device according to the third embodiment.
Fig. 17 is an explanatory diagram showing another exemplary introduction operation for the high-speed introduction device according to the third embodiment.
Fig. 18 is an explanatory diagram showing a main portion of the high-speed introduction device according to the third embodiment.
Fig. 19 is a cross sectional view showing an exemplary high-speed introduction device according to a modification 3-1.
Fig. 20 is a cross sectional view showing an exemplary high-speed introduction device according to a modification 3-2.
Fig. 21 is a cross sectional view showing an exemplary high-speed introduction device according to a fourth embodiment.
Fig. 22 is a configuration diagram showing an exemplary circuit of a power conversion device according to a fifth embodiment.
Fig. 23 is a schematic diagram showing an exemplary circuit of a switchgear according to a sixth embodiment.

### DESCRIPTION OF EMBODIMENTS

### First Embodiment.

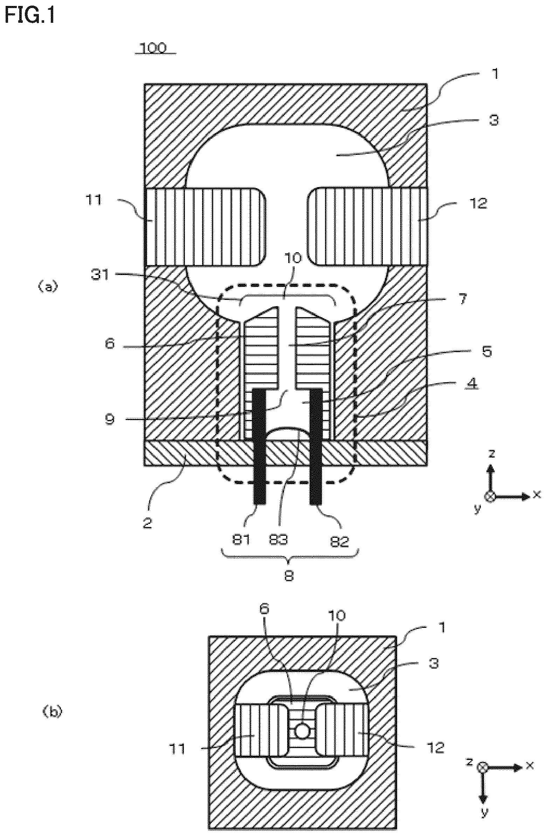

Hereinafter, a high-speed introduction device according to a first embodiment of the present disclosure will be described with reference to figures. Fig. 1 is a cross sectional view showing an exemplary high-speed introduction device 100 according to the first embodiment. It should be noted that (a) in Fig. 1 is a cross sectional view along a zx plane, and (b) in Fig. 1 is a cross sectional view along an xy plane. High-speed introduction device 100 shown in Fig. 1 includes: a connection chamber 3 provided in an insulative container 1; electrodes 11, 12 each disposed in connection chamber 3; and an injector 4 that communicates with connection chamber 3.

Connection chamber 3 is an insulative space, and is a space for forming a discharging path DP between electrodes 11, 12 during an introduction operation as described later. Hereinafter, connection chamber 3 may be referred to as an arc space.

Each of electrodes 11, 12 is an electrode composed of a conductive material to allow a fault current to flow therethrough, and short-circuits a fault current when they are brought into electrical conduction with each other in response to detection of an electrical fault. Hereinafter, electrodes 11, 12 may be referred to as short-circuit electrodes 11, 12. Short-circuit electrodes 11, 12 are inserted from outside of connection chamber 3 and are disposed to be separated from each other in connection chamber 3. Short-circuit electrodes 11, 12 may be disposed to be separated from each other so as to attain an electrically insulated state in a normal state, i.e., in a state before the introduction operation. For example, short-circuit electrodes 11, 12 are disposed to be separated from each other by an insulation distance or more. In the present embodiment, short-circuit electrodes 11, 12 are fixed in connection chamber 3.

Injector 4 may be an injector to inject at least one of a charged particle 21 and a conductive particle 22 into connection chamber 3. For example, injector 4 has: a charged-particle generation unit 8; and a nozzle 6 to inject charged particles 21 generated by charged-particle generation unit 8 toward connection chamber 3.

Charged-particle generation unit 8 includes, for example, electrodes 81, 82 to generate an arc (also referred to as arc plasma; a discharging phenomenon or a dielectric breakdown state occurring in a space on that occasion). Hereinafter, electrodes 81, 82 will be also referred to as ignition electrodes 81, 82 or will be collectively referred to as an arc electrode pair. Ignition electrodes 81, 82 are inserted from outside of pressure chamber 5 and are fixed at positions separated from each other. Charged-particle generation unit 8 generates an arc by using, for example, a potential difference between ignition electrodes 81, 82. Normally, a gas generated at the time of generation of arc has a temperature of several tens of thousands °C, and the inside of the gas is in a plasma state, i.e., a state including charged particles 21, and the gas has electric conductivity. For example, charged-particle generation unit 8 may be configured to generate an arc in the following manner: when a fault current is detected, voltage is applied to each of ignition electrodes 81, 82 to ionize gas molecules existing in a space between ignition electrodes 81, 82, thereby causing dielectric breakdown in the space. Hereinafter, the gas generated at the time of generation of arc may be referred to as a conductive gas or a gas including charged particles 21.

A fuse 83 may be attached between ignition electrodes 81, 82. Fuse 83 may be any fuse that is melted and disconnected by heat generated by fuse 83 itself when a certain current value is reached. Fuse 83 may be, for example, a metal wire or a metal wool. Instead of connecting between ignition electrodes 81, 82 by fuse 83, part of the space between ignition electrodes 81, 82 may be filled with a metal powder so as to electrically connect ignition electrodes 81, 82 to each other. Fuse 83 or the metal powder temporarily brings ignition electrodes 81, 82 into electrical conduction with each other and then ceases to exist, thereby promoting generation of arc.

In the present example, charged-particle generation unit 8 is accommodated in pressure chamber 5. Pressure chamber 5 is not particularly limited as long as it has a structure that can endure a pressure change inside pressure chamber 5. Pressure chamber 5 may be composed of, for example, an insulative material. In injector 4, nozzle 6 is a portion that connects an injection port 10 and pressure chamber 5 serving as a space in which charged-particle generation unit 8 is accommodated, and conveys, to injection port 10, charged particles 21 generated by charged-particle generation unit 8. In other words, nozzle 6 forms a communication path that connects connection chamber 3 and the space in which charged-particle generation unit 8 is accommodated. Specifically, nozzle 6 forms a communication path that connects an opening 9 provided in the space and injection port 10 communicating with connection chamber 3. Therefore, communication path 7 communicates with connection chamber 3. When the introduction operation is started, injector 4 injects charged particles 21 into connection chamber 3 via communication path 7.

Connection chamber 3 is provided with an opening 31 to communicate with injector 4. In the example shown in the figure, injector 4 and connection chamber 3 communicate with each other in such a manner that injector 4 is accommodated in opening 31. In the present embodiment, injector 4 and injection port 10 thereof are fixed toward connection chamber 3. Therefore, the position of injector 4 is not changed during the introduction operation.

In the example shown in Fig. 1, the members constituting nozzle 6 also constitutes pressure chamber 5; however, the configurations of pressure chamber 5 and nozzle 6 are not limited thereto. Further, in the example shown in Fig. 1, a portion of a wall surface of pressure chamber 5 is constituted of a cover 2 that seals connection chamber 3; however, the configuration of pressure chamber 5 is not limited thereto.

Injector 4 may inject charged particles 21 by utilizing, for example, pressure increased in pressure chamber 5 due to charged particles 21 being generated by charged-particle generation unit 8. In the present example, the conductive gas (more specifically, charged particles 21 and the high-temperature gas including charged particles 21) is injected via injection port 10 by utilizing the pressure increased in pressure chamber 5 due to the conductive gas being generated at the time of generation of arc by charged-particle generation unit 8. The conductive gas injected via injection port 10 flows into connection chamber 3 without modification. Thus, charged particles 21 generated by charged-particle generation unit 8 are injected into connection chamber 3.

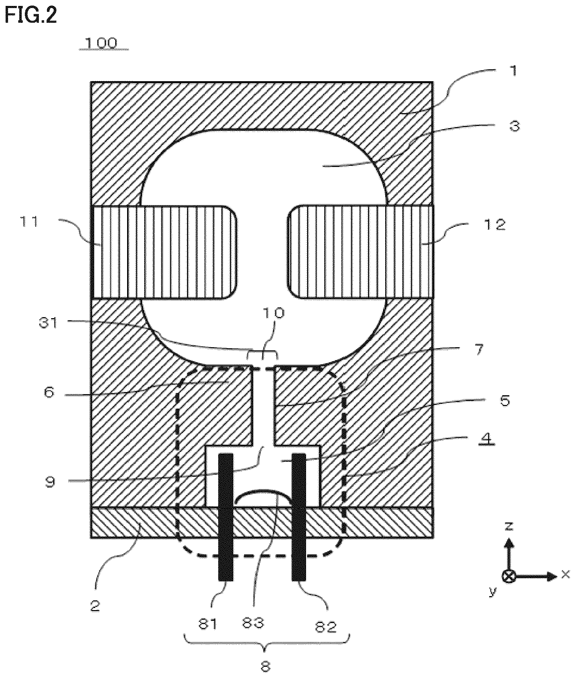

Fig. 2 is a cross sectional view showing another exemplary high-speed introduction device 100 according to the first embodiment. In the example shown in Fig. 2, connection chamber 3 and pressure chamber 5 are formed in insulative container 1, and communication path 7 is formed to communicate opening 31 of connection chamber 3 with opening 9 of pressure chamber 5. In the present example, a portion of insulative container 1 that constitutes communication path 7 is nozzle 6. Opening 31 of connection chamber 3 is injection port 10. The other points are the same as those in the example shown in Fig. 1.

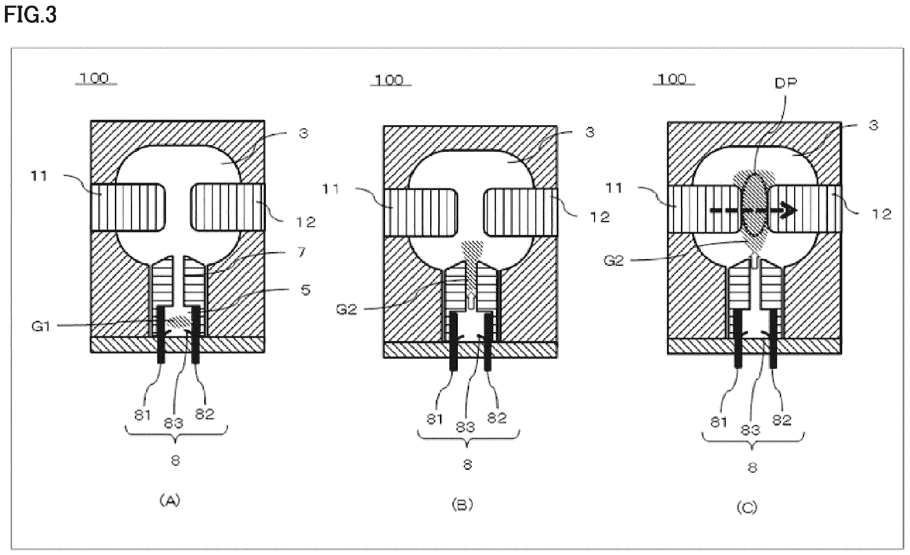

Next, the introduction operation for high-speed introduction device 100 according to the first embodiment will be described. Fig. 3 is an explanatory diagram showing an exemplary introduction operation for high-speed introduction device 100 according to the first embodiment. In the example shown in Fig. 3, when the introduction operation is started in response to detection of a fault current or the like, charged-particle generation unit 8 of injector 4 first generates charged particles 21 in pressure chamber 5 in high-speed introduction device 100 (see (A) in Fig. 3). In high-speed introduction device 100, for example, when a fault current is detected, a current may flow through each of ignition electrodes 81, 82 to melt and disconnect, due to Joule heat, fuse 83 that connects ignition electrodes 81, 82 to each other, with the result that charged particles 21 are generated in pressure chamber 5. In the figure, G1 indicates how an arc including charged particles 21 is generated in pressure chamber 5.

When pressure in pressure chamber 5 is increased in response to the generation of arc, charged particles 21 are released into connection chamber 3 via communication path 7 (see (B) in Fig. 3). A white arrow in the figure indicates how conductive gas G2 (more specifically, charged particles 21 and high-temperature gas including charged particles 21) in the form of plasma as generated by the generation of arc is released from injection port 10 due to the pressure increased in pressure chamber 5.

Conductive gas G2 having flowed into connection chamber 3 also flows into a space between short-circuit electrodes 11, 12 to cause dielectric breakdown or increased spatial electric conductivity in the space. As a result, discharging path DP is formed in the space to attain an electrical conduction state between short-circuit electrodes 11, 12, thus completing the introduction operation for high-speed introduction device 100 (see (C) in Fig. 3). A black arrow in the figure indicates how the fault current is short-circuited. It should be noted that depending on a circuit configuration, the fault current may flow in an opposite direction.

As described above, since the high-speed introduction device according to the present embodiment includes injector 4 to inject, into connection chamber 3, charged particles 21 generated by the application of voltage to each of ignition electrodes 81, 82 during the introduction operation so as to promote formation of discharging path DP between short-circuit electrodes 11, 12, the short-circuit electrodes can be electrically connected to each other at a high speed. In particular, according to the above-described example, since charged particles 21 are injected into connection chamber 3 by utilizing the pressure change at the time of generation of charged particles 21, the short-circuit electrodes can be electrically connected to each other at a higher speed than that in the method of mechanically driving the short-circuit electrodes to bring the short-circuit electrodes into direct contact with each other. Since the fault current can be removed at a high speed in this way, an arc time in an external circuit can be shortened to result in reduced scale of failure, improved reliability of the device as a whole, and simplified explosion prevention structure.

### (Modification 1-1)

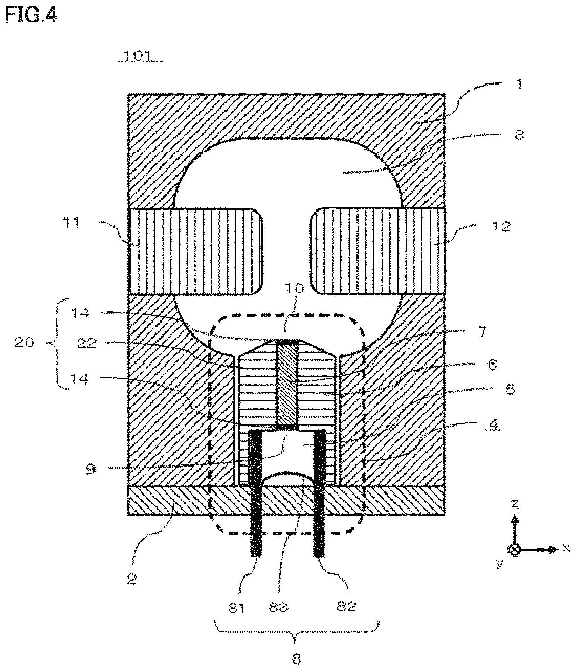

Fig. 4 is a cross sectional view showing an exemplary high-speed introduction device 101 according to a modification 1-1 of the first embodiment. Injector 4 in high-speed introduction device 101 shown in Fig. 4 is different from high-speed introduction device 100 of the first embodiment shown in Fig. 1 in that conductive particles 22 are stored in communication path 7. Injector 4 of the present modification has a storage portion 20 to store conductive particles 22 inside communication path 7. It should be noted that the configuration of injector 4 of the present modification is also applicable to injector 4 of another high-speed introduction device (for example, high-speed introduction device 200 shown in Fig. 2).

Storage portion 20 may be formed, for example, by providing, in communication path 7, partitions 14 each configured to close communication path 7 in a normal state and each configured to be detached when certain external force or heat is applied. Each of partitions 14 may be any partition that closes communication path 7 (that brings communication path 7 into a closed state) in the normal state and that is detached, is crushed, is rotated, or ceases to exist to open communication path 7 when certain external force or heat is applied to partition 14, for example.

In the present modification, charged-particle generation unit 8 also functions as a pressure adjustment mechanism to adjust an internal pressure of pressure chamber 5 by external control (application of voltage to each of ignition electrodes 81, 82). It should be noted that the pressure adjustment mechanism in the present example may be other than charged-particle generation unit 8. As an example, the pressure adjustment mechanism may be a mechanical or electromagnetic type control valve provided at opening 9 of pressure chamber 5 that is maintained in a high pressure state in advance. Also with such a mechanism, pressure in a direction of connection chamber 3 is generated to act on storage portion 20 by utilizing pressure change in pressure chamber 5 by the external control (driving of the control valve), thereby injecting conductive particles 22 into connection chamber 3. Here, the direction of connection chamber 3 refers to a direction toward connection chamber 3 in communication path 7.

Storage portion 20 is not particularly limited as long as conductive particles 22 can be injected into connection chamber 3 in response to the pressure change in pressure chamber 5. It is more preferable that conductive particles 22 stored in storage portion 20 are each lighter in weight, and metal particles are suitable as conductive particles 22, for example. This is due to the following reason: as conductive particles 22 are each lighter in weight, conductive particles 22 are likely to accelerate faster and spread at a higher speed.

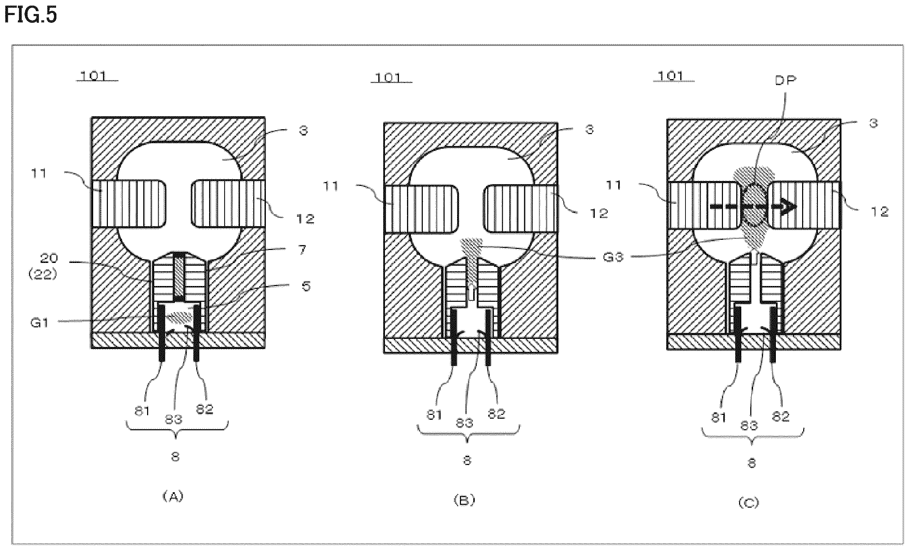

Next, the introduction operation for high-speed introduction device 101 according to modification 1-1 will be described. Fig. 5 is an explanatory diagram showing an exemplary introduction operation for high-speed introduction device 101 according to modification 1-1. In the example shown in Fig. 5, when the introduction operation for high-speed introduction device 101 is started, first, charged-particle generation unit 8 serving as the pressure adjustment mechanism of injector 4 generates an arc in pressure chamber 5 to increase pressure in pressure chamber 5 (see (A) in Fig. 5). On this occasion, the pressure adjustment mechanism may be any pressure adjustment mechanism as long as storage portion 20 is fed with pressure (pressed) in the direction of connection chamber 3, and charged particles 21 may or may not be generated.

When the pressure is applied to storage portion 20 in the direction of connection chamber 3 in response to the generation of arc, partition 14 is brought into an opened state, with the result that conductive particles 22 stored in storage portion 20 are released into connection chamber 3 (see (B) in Fig. 5). A white arrow in the figure indicates how partition 14 is brought into the opened state to push conductive particles 22 due to the pressure being applied to storage portion 20 in the direction of connection chamber 3. A reference symbol G3 in the figure represents the conductive gas including at least conductive particles 22 to flow into connection chamber 3. It should be noted that conductive gas G3 may further include charged particles 21.

Conductive gas G2 having flowed into connection chamber 3 also flows into a space between short-circuit electrodes 11, 12 to cause dielectric breakdown or increased spatial electric conductivity in the space. As a result, discharging path DP is formed in the space to attain an electrical conduction state between short-circuit electrodes 11, 12, thus completing the introduction operation for high-speed introduction device 100 (see (C) in Fig. 5). A broken line arrow in the figure indicates how the fault current is short-circuited. It should be noted that the other points are the same as those of the first embodiment.

In the example of the first embodiment described above, conductive gas G2 generated in pressure chamber 5 is released into connection chamber 3 via communication path 7. On this occasion, gas molecules in an ionized state is promoted to be bonded again due to heat radiation from a wall surface serving as a flow path or due to cooling resulting from adiabatic expansion or the like at the time of injection, and the electric conductivity is accordingly decreased to reduce an amount of charged particles 21 that can be supplied, with the result that the above-described effects (the formation of discharging path DP between short-circuit electrodes 11, 12 and the short-circuiting of the fault current) may not be sufficiently obtained. To address this, in the present modification, conductive particles 22 are accommodated in communication path 7, thereby obtaining the above-described effects more securely.

There are mainly two effects in storing conductive particles 22 in communication path 7, and the first effect is such that when conductive particles 22 are introduced between short-circuit electrodes 11, 12 to each of which voltage is applied, charges or protrusions of conductive particles 22 cause distortion of a local electric field, with the result that dielectric breakdown is likely to be induced. With conductive particles 22 flowing into connection chamber 3, the dielectric strength of the space can be intentionally reduced, thereby promoting formation of discharging path DP. The second effect is such that in the case of generating a high-temperature gas by the generation of arc in pressure chamber 5, a chemical reaction occurs to generate heat when conductive particles 22 are mixed with the generated high-temperature gas, with the result that the conductive gas having a higher degree of ionization can be generated and can flow thereinto.

As described above, according to the high-speed introduction device of the present modification, since injector 4 includes the mechanism to inject conductive particles 22 into connection chamber 3 during the introduction operation so as to promote the formation of discharging path DP between short-circuit electrodes 11, 12, discharging path DP can be formed at a higher speed and more securely, thereby electrically connecting the short-circuit electrodes to each other.

It should be noted that even when conductive particles 22 are not stored, the pressure of pressure chamber 5 can be readily adjusted by providing partitions 14, and the pressure change in pressure chamber 5 can be utilized to inject charged particles 21 into connection chamber 3, thereby electrically connecting the short-circuit electrodes to each other at a high speed and more securely.

### (Modification 1-2)

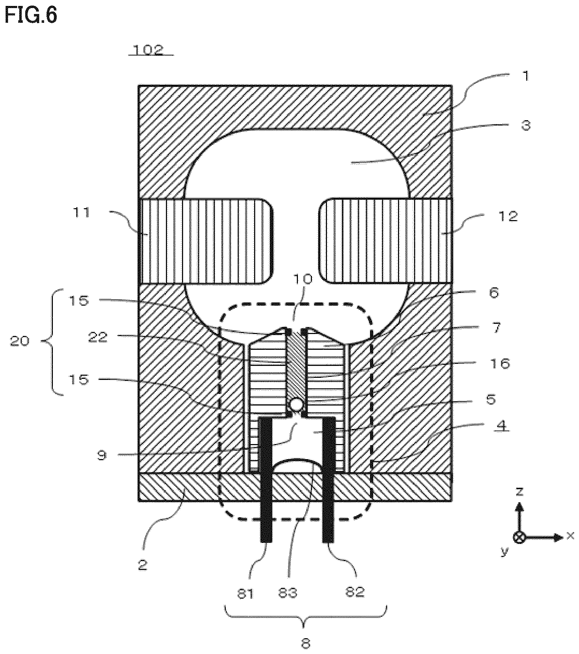

Fig. 6 is a cross sectional view showing an exemplary high-speed introduction device 102 according to a modification 1-2 of the first embodiment. High-speed introduction device 102 shown in Fig. 6 is different from modification 1-1 in that high-speed introduction device 102 includes: a pair of valve seats 15 fixed in communication path 7; and a sealing body 16 inserted in a region surrounded by valve seats 15.

Each of valve seats 15 is a member fixed in communication path 7 to receive sealing body 16 that is movable in communication path 7. Sealing body 16 is a member movable in communication path 7 and supported by valve seat 15 to seal communication path 7. Sealing body 16 may be, for example, a spherical body that is smaller than the inner diameter of communication path 7 that forms storage portion 20 and that is larger than the diameter of a flow path formed inside communication path 7 by valve seat 15. Valve seat 15 may be any valve seat as long as communication path 7 can be sealed in cooperation with valve seat 15 and sealing body 16, such as a protrusion provided on the inner wall of communication path 7 or a partition provided with a hole that is larger than conductive particles 22 and that is larger than sealing body 16. It should be noted that specific configurations of sealing body 16 and valve seat 15 are not particularly limited as long as communication path 7 can be closed by a pressure difference between connection chamber 3 and pressure chamber 5.

Fig. 6 shows an example in which valve seats 15 are respectively provided at the outlet (boundary on the connection chamber 3 side) and inlet (boundary on the pressure chamber 5 side) of storage portion 20; however, valve seat 15 may be provided only at the outlet of storage portion 20, for example. In that case, partition 14 can be provided at the inlet of storage portion 20. By providing valve seat 15 at least at the outlet of storage portion 20 or on the connection chamber side with respect to the outlet of storage portion 20, communication path 7 can be sealed after injecting conductive particles 22. Hereinafter, valve seat 15 provided at the outlet of storage portion 20 or at the region on the connection chamber 3 side with respect to the outlet of storage portion 20 will be also referred to as connection-chamber-side valve seat 15, and valve seat 15 provided at the inlet of storage portion 20 or at the region on the pressure chamber 5 side with respect to the inlet of storage portion 20 will be also referred to as pressure-chamber-side valve seat 15. It is assumed that in the normal state, sealing body 16 is supported by pressure-chamber-side valve seat 15 and is accordingly disposed at the inlet of storage portion 20 or at the region on the pressure chamber 5 side with respect to the inlet of storage portion 20.

Partition 14 described above can be also provided together with valve seat 15. For example, partition 14 may be provided on the outer side with respect to valve seat 15 when viewed from sealing body 16 and may be provided on the upstream side with respect to valve seat 15 when viewed from the flow path for charged particles 21 in communication path 7. It should be noted that when both valve seat 15 and partition 14 are included, a positional relation between valve seat 15 and partition 14 is not particularly limited, the partition may be provided on the outer side or inner side with respect to the valve seat or may be provided on the downstream side or upstream side with respect to the valve seat, and the positional relation may be determined in accordance with an opened/closed structure of partition 14, for example. That is, partition 14 may be disposed to be brought into an opened state without preventing release of conductive gas G2 and conductive particles 22 during the introduction operation. According to the configuration including both valve seat 15 and partition 14, conductive particles 22 are held back by partition 14 before the introduction operation, and partition 14 is brought into the opened state during the introduction operation to release charged particles 21, etc., and then communication path 7 can be sealed again.

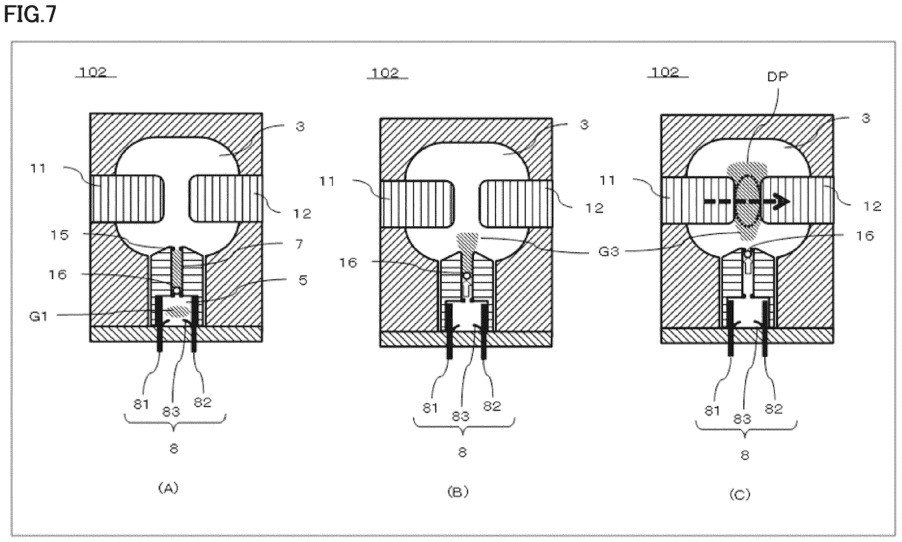

Fig. 7 is an explanatory diagram showing an exemplary introduction operation for high-speed introduction device 102 according to modification 1-2. In the example shown in Fig. 7, when the introduction operation for high-speed introduction device 102 is started, charged-particle generation unit 8 serving as a pressure adjustment mechanism of injector 4 first generates an arc in pressure chamber 5 to increase the pressure in pressure chamber 5 (see (A) in Fig. 7). Also in the present example, the pressure adjustment mechanism may be any pressure adjustment mechanism as long as storage portion 20 is fed with pressure (pressed) in the direction of connection chamber 3, and charged particles 21 may or may not be generated.

When the pressure is applied to storage portion 20 in the direction of connection chamber 3 in response to the generation of arc, sealing body 16 starts to be moved and conductive particles 22 stored in storage portion 20 are released into connection chamber 3 (see (B) in Fig. 7). A white arrow in the figure indicates how sealing body 16 and conductive particles 22 are pushed by the pressure being applied to storage portion 20 in the direction of connection chamber 3. A reference symbol G3 in the figure represents the conductive gas including at least conductive particles 22 to flow into connection chamber 3. It should be noted that conductive gas G3 may further include charged particles 21.

Conductive gas G2 having flowed into connection chamber 3 also flows into the space between short-circuit electrodes 11, 12 to cause dielectric breakdown and increased spatial electric conductivity in the space. As a result, discharging path DP is formed in the space to attain an electrical conduction state between short-circuit electrodes 11, 12 (see (C) in Fig. 7). A broken line arrow in the figure indicates how the fault current is short-circuited.

Further, in the present modification, in (C) in Fig. 7, after a sufficient amount of conductive particles 22 is released to form discharging path DP, sealing body 16 is held back by connection-chamber-side valve seat 15. Then, sealing body 16 seals communication path 7 with sealing body 16 being pressed by connection-chamber-side valve seat 15.

According to the present modification, in addition to the effect of modification 1-1, since sealing body 16 seals communication path 7 after conductive particles 22 are released into connection chamber 3, it is possible to prevent backflow of conductive particles 22 or conductive gas G3 including conductive particles 22 as having flowed into connection chamber 3.

It should be noted that even when conductive particles 22 are not stored, the valve structure with the set of valve seats 15 and sealing body 16 may be included, and in that case, not only the pressure of pressure chamber 5 can be adjusted but also the backflow of the gas having flowed into connection chamber 3 can be prevented. It can be said that these are effects of the openable/closeable partition including partition 14.

Further, in the first embodiment described above, it has been illustratively described that each of injector 4 and injection port 10 thereof is disposed at the position between short-circuit electrodes 11, 12 in the current direction (for example, the x axis direction in Fig. 1) of the short-circuit circuit for the fault current and is disposed to orient in a direction (for example, a direction along the yz plane of Fig. 1, such as the y axis direction or z axis direction) perpendicular to the current direction; however, the position and orientation of injection port 10 are not limited thereto. For example, injector 4 and injection port 10 may be disposed such that the space between short-circuit electrodes 11, 12 is located on an extension line of the fluid flow path formed by communication path 7 from injection port 10. On this occasion, injection port 10 may orient in a direction parallel to the current direction or in a direction oblique to the current direction.

### Second Embodiment.

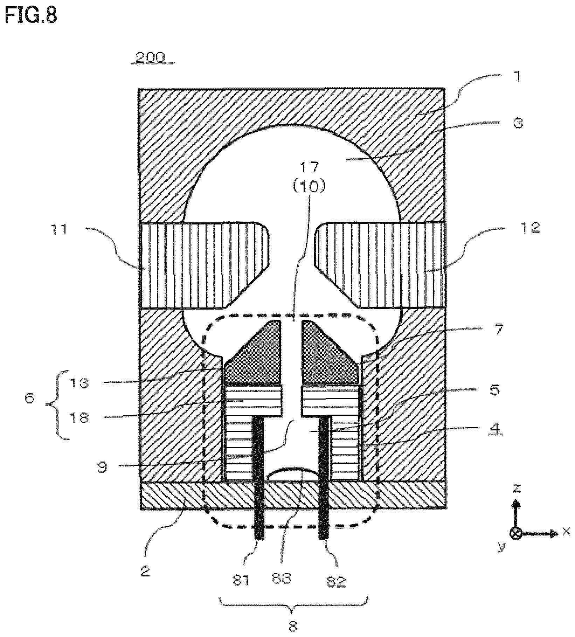

Next, a high-speed introduction device according to a second embodiment in which an injector is incorporated in a short-circuit electrode will be described with reference to figures. Fig. 8 is a cross sectional view showing an exemplary high-speed introduction device 200 according to the second embodiment. As with the first embodiment, high-speed introduction device 200 shown in Fig. 8 includes: connection chamber 3 provided in insulative container 1; electrodes 11, 12 each disposed in connection chamber 3; and injector 4 that communicates with inside of connection chamber 3. The present embodiment is different from the first embodiment in that high-speed introduction device 200 further has an electrode 13 disposed to be electrically separated from electrode 11 and electrode 12 at least before the introduction operation, electrode 13 being composed of a conductive material.

Also in the present embodiment, short-circuit electrodes 11, 12 are fixedly disposed to be separated from each other in connection chamber 3. Electrode 13 is an electrode to assist electrical conduction between short-circuit electrodes 11, 12 during the introduction operation. Hereinafter, electrode 13 is referred to as an assistance electrode 13. Assistance electrode 13 is disposed at a position between short-circuit electrodes 11, 12 in the current direction of the short-circuit circuit (x axis direction in the figure) so as to be separated from each of short-circuit electrodes 11, 12, for example. As in the example shown in the figure, short-circuit electrodes 11, 12 and assistance electrode 13 may each have a surface facing the other electrodes.

In the present embodiment, assistance electrode 13 and injector 4 are combined with each other. Specifically, assistance electrode 13 is provided with a hole portion 17 that communicates with connection chamber 3, and injector 4 injects charged particles 21, etc., (including at least one of charged particle 21 and conductive particle 22) into connection chamber 3 via hole portion 17 of assistance electrode 13. That is, hole portion 17 constitutes a portion of communication path 7 that connects pressure chamber 5 and connection chamber 3 to each other.

Injector 4 may have assistance electrode 13 at its tip portion, for example. For example, assistance electrode 13 may be formed in injector 4 by forming the tip portion of injector 4 using a conductive material. Here, the tip portion is a portion that forms a surface of injector 4 on the injection port 10 side, and in particular, refers to a portion including an opening of communication path 7 on the connection chamber 3 side. In the present example, the tip portion serving as assistance electrode 13 is fixed to an insulative container 18 that constitutes a wall surface of pressure chamber 5. Insulative container 18 is fixed to cover 2. That is, injector 4 is fixed toward connection chamber 3.

In the example shown in Fig. 8, assistance electrode 13 is provided with one hole portion 17, and the opening of hole portion 17 on the connection chamber 3 side serves as injection port 10 of injector 4. In the present example, each of injector 4 and injection port 10 thereof (opening of hole portion 17 on the connection chamber 3 side) is disposed at a position between short-circuit electrodes 11, 12 in the current direction (x axis direction in the figure) of the short-circuit circuit for the fault current and is disposed to orient in a direction perpendicular to the current direction. It should be noted that the position and orientation of injector 4 are not limited thereto, and each of injector 4 and injection port 10 may be disposed such that the space between short-circuit electrodes 11, 12 is located on an extension line of the fluid flow path formed by communication path 7 from injection port 10, for example.

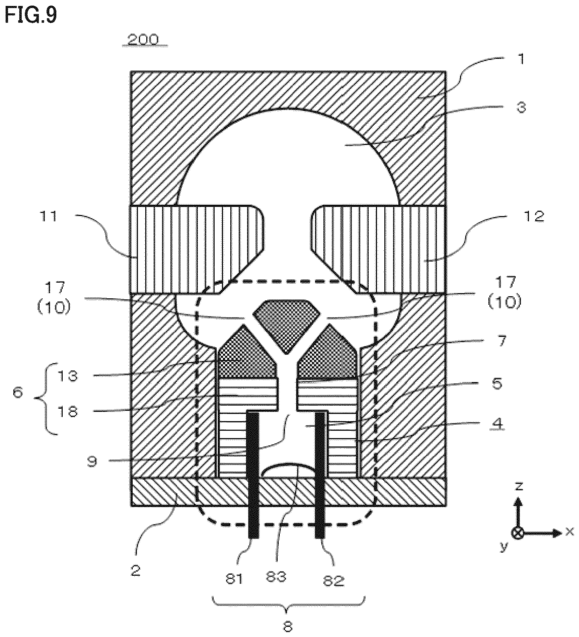

The number of hole portions 17 is not particularly limited, and one or a plurality of hole portions 17 may be provided. Fig. 9 is a cross sectional view showing another exemplary high-speed introduction device 200 according to the second embodiment. In the example shown in Fig. 9, assistance electrode 13 is provided with two hole portions 17, and injector 4 injects charged particles 21, etc., into connection chamber 3 via two hole portions 17 provided in assistance electrode 13.

In the present example, each of injector 4 and injection ports 10 thereof (openings of hole portions 17 on the connection chamber 3 side) is disposed at a position between short-circuit electrodes 11, 12 in the current direction (x axis direction in the figure) of the short-circuit circuit for the fault current, and each of injection ports 10 is disposed to orient one of short-circuit electrodes 11, 12 as a target for electrical conduction. More specifically, one of two injection ports 10 is disposed to orient toward the space between short-circuit electrode 11 and assistance electrode 13, and the other of two injection ports 10 is disposed to orient toward the space between short-circuit electrode 12 and assistance electrode 13. However, the position and orientation of each injection port 10 are not limited thereto. For example, each of injector 4 and injection ports 10 may be disposed such that each of short-circuit electrode 11 and short-circuit electrode 12 each serving as a target for electrical conduction is located on an extension line of the fluid flow path formed by communication path 7 from injection port 10. On this occasion, one of injection ports 10 may orient in a direction parallel to the current direction or in a direction oblique to the current direction.

The other points may be the same as those in the first embodiment.

The introduction operation for high-speed introduction device 200 according to the present embodiment is basically the same as that of the first embodiment except that the conductive gas (G2, G3) including charged particles 21, conductive particles 22, or both is injected via hole portion 17.

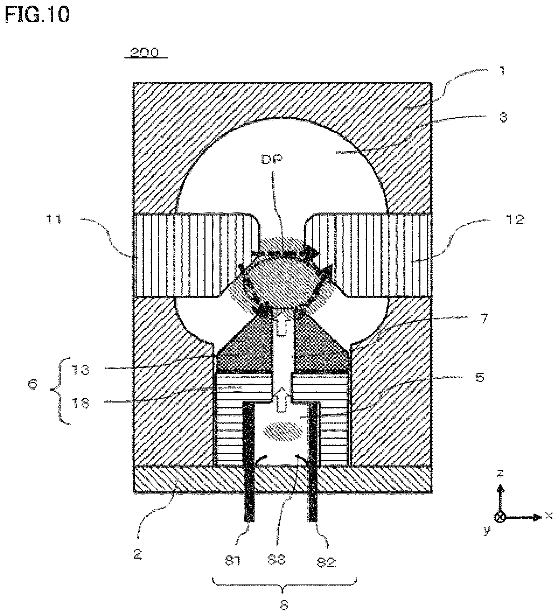

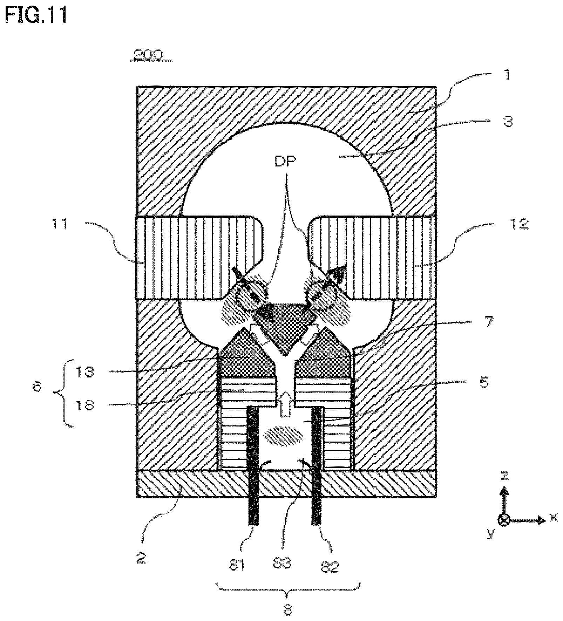

Each of Figs. 10 and 11 is an explanatory diagram showing exemplary discharging path(s) DP formed by the introduction operation for high-speed introduction device 200 according to the second embodiment. Fig. 10 shows an exemplary discharging path DP formed by the introduction operation for high-speed introduction device 200 shown in Fig. 8. As shown in Fig. 10, injector 4 injects the conductive gas (G2, G3) including charged particles 21, etc., into connection chamber 3 via hole portion 17 of assistance electrode 13 during the introduction operation. Thus, discharging path DP is formed between short-circuit electrodes 11, 12 and assistance electrode 13. As a result, short-circuit electrodes 11, 12 can be brought into electrical conduction with each other via discharging path DP, thereby short-circuiting the fault current.

Fig. 11 shows exemplary discharging paths DP formed by the introduction operation for high-speed introduction device 200 shown in Fig. 9. As shown in Fig. 11, injector 4 injects the conductive gas (G2, G3) including charged particles 21, etc., into connection chamber 3 via hole portions 17 of assistance electrode 13 during the introduction operation. Thus, discharging paths DP are formed at least between short-circuit electrode 11 and assistance electrode 13 and between short-circuit electrode 12 and assistance electrode 13. As a result, short-circuit electrodes 11, 12 can be brought into electrical conduction with each other via assistance electrode 13, thereby short-circuiting the fault current. It should be noted that also in the present example, a discharging path DP can be formed between short-circuit electrode 11 and short-circuit electrode 12. In either case, the fault current may be short-circuited by using discharging paths DP formed.

As described above, according to the high-speed introduction device of the present embodiment, in addition to the effect of the first embodiment, injector 4 injects charged particles 21, etc., via hole portion(s) 17 of assistance electrode 13 that assists electrical conduction between short-circuit electrodes 11, 12 during the introduction operation, so as to promote formation of the discharging path(s) in cooperation with assistance electrode 13, with the result that the short-circuit electrodes can be electrically connected to each other at a higher speed. As a result, since the fault current can be removed at a higher speed, an arc time in an external circuit can be shortened to result in reduced scale of failure, improved reliability of the device as a whole, and simplified explosion prevention structure.

### (Modification 2-1)

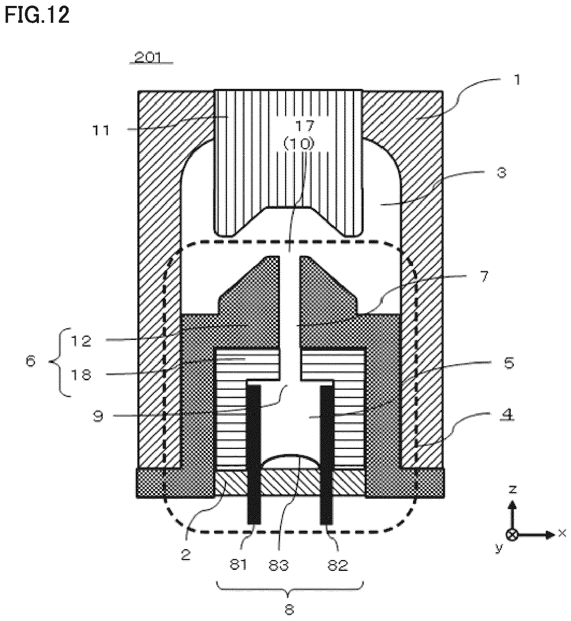

Fig. 12 is a cross sectional view showing an exemplary high-speed introduction device 201 according to a modification 2-1 of the second embodiment. High-speed introduction device 201 shown in Fig. 12 is the same as each of the examples shown in Figs. 8 and 9 in that the tip portion of injector 4 is composed of a conductive material, but is different from the above examples in that injector 4 is combined with one of short-circuit electrodes 11, 12, rather than assistance electrode 13.

### (Modification 2-2)

A high-speed introduction device 201 according to a modification 2-2 includes: connection chamber 3 provided in insulative container 1; electrodes 11, 12 each disposed in connection chamber 3; and injector 4 that communicates with inside of connection chamber 3. However, in the present modification, injector 4 is combined with one of short-circuit electrodes 11, 12 and communicates with the inside of connection chamber 3.

More specifically, one of short-circuit electrodes 11, 12 (short-circuit electrode 12 in the present example) is provided with a hole portion 17 that communicates injector 4 and connection chamber 3 with each other. Accordingly, injector 4 injects charged particles 21, etc., into connection chamber 3 via hole portion 17 of the one of the electrodes.

Injector 4 may have a conductive member at its tip portion to serve as short-circuit electrode 12, and may be combined with short-circuit electrode 12 with the conductive member being drawn to outside or being connected to a drawn electrode, for example. Further, injector 4 may be combined therewith with injector 4 being accommodated inside short-circuit electrode 12, for example. In this case, it can be said that short-circuit electrode 12 is formed by covering injector 4 with the conductive material.

In the example shown in Fig. 12, pressure chamber 5 is surrounded by the insulative material (insulative container 18 and cover 2) so as to avoid the conductive material serving as short-circuit electrode 12 and ignition electrodes 81, 82 from being electrically connected together. In the present example, opening 9 that communicates with connection chamber 3 via hole portion 17 of short-circuit electrode 12 is provided in insulative container 18 that constitutes at least a portion of the wall surface of pressure chamber 5.

Short-circuit electrode 12 provided with hole portion 17 is fixed to insulative container 1 that forms connection chamber 3 and insulative container 18 that constitutes the wall surface of pressure chamber 5. Insulative container 18 is fixed to cover 2. That is, injector 4 is fixed toward connection chamber 3. It should be noted that the configuration of injector 4 may be the same as that of the second embodiment except that the conductive material formed at the tip portion is drawn to the outside of connection chamber 3.

Further, Fig. 12 shows an example in which each of injector 4 and injection port 10 thereof is disposed to orient in a direction parallel to the current direction (z axis direction in the figure) of the short-circuit circuit for the fault current; however, the position and orientation of injection port 10 are not limited thereto. For example, injector 4 and injection port 10 may be disposed such that the other short-circuit electrode (short-circuit electrode 11) serving as a target for electrical conduction during the introduction operation is located on an extension line of the fluid flow path formed by communication path 7 from injection port 10.

It should be noted that also in the present modification, the number of hole portions 17 is not particularly limited, and one or a plurality of hole portions 17 may be provided.

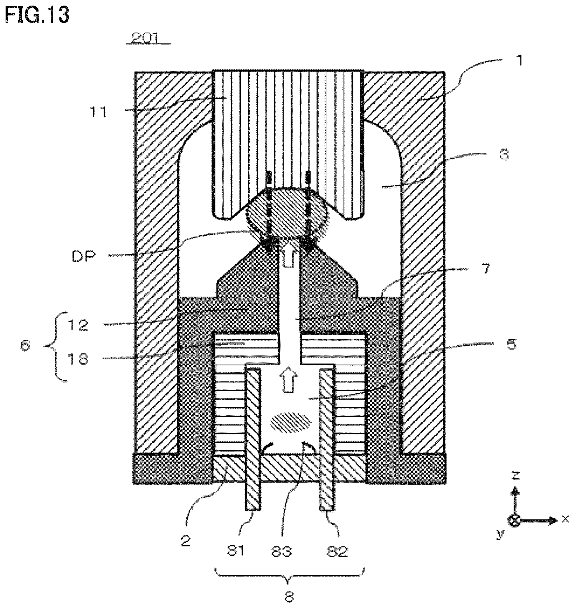

Fig. 13 is an explanatory diagram showing an exemplary discharging path DP formed by the introduction operation for high-speed introduction device 201 according to modification 2-1 of the second embodiment. As shown in Fig. 13, injector 4 injects the conductive gas (G2, G3) including charged particles 21, etc., into connection chamber 3 via hole portion 17 of one of short-circuit electrodes 11, 12 during the introduction operation. Thus, discharging path DP is formed between short-circuit electrodes 11, 12. As a result, short-circuit electrodes 11, 12 can be brought into electrical conduction with each other via discharging path DP, thereby short-circuiting the fault current. It should be noted that depending on a circuit configuration, the fault current may flow in an opposite direction.

As described above, according to the high-speed introduction device of the present modification, in addition to the effect of the first embodiment, since injector 4 injects charged particles 21, etc., via hole portion 17 provided in one of the short-circuit electrodes so as to assist electrical conduction with the other short-circuit electrode, the same effect as that of the second embodiment can be obtained without increasing the size of the high-speed introduction device.

In the present modification, as shown in the figure, the tip shapes of short-circuit electrodes 11, 12 may be as follows: the side (short-circuit electrode 12 provided with hole portion 17 in the present example) combined with injector 4 has a protruding shape and the opposite side (short-circuit electrode 11) has a recessed shape. Thus, charged particles 21, etc., released from injector 4 can be efficiently distributed in the space between short-circuit electrodes 11, 12.

It should be noted that also in each of the present embodiment and the modifications thereof, injector 4 may include another pressure adjustment mechanism instead of charged-particle generation unit 8, and injector 4 may further include storage portion 20 or the openable/closeable partition (partition 14 or the set of valve seats 15 and sealing body 16). The effect when these elements are included is that same as that in the first embodiment.

### Third Embodiment.

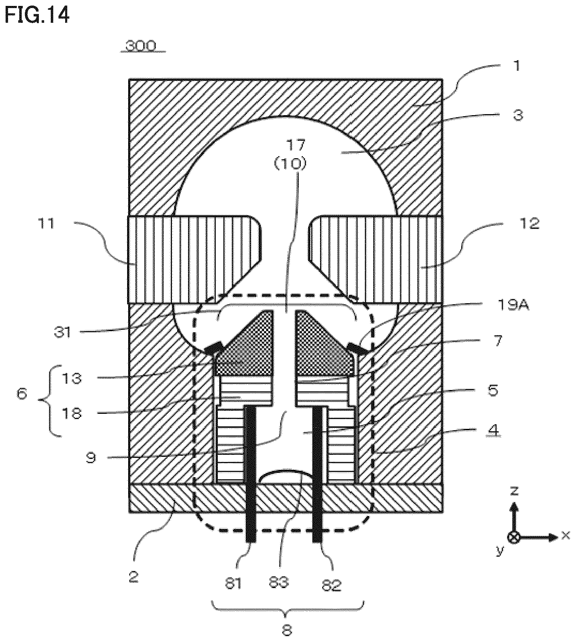

In each of the first embodiment and the second embodiment, each of the electrodes is fixedly disposed in connection chamber 3. In a third embodiment, a high-speed introduction device using a movable electrode will be described with reference to figures. Fig. 14 is a cross sectional view showing an exemplary high-speed introduction device 300 according to the third embodiment. High-speed introduction device 300 shown in Fig. 14 is different from high-speed introduction device 200 having assistance electrode 13 shown in each of Figs. 8 and 9 in the second embodiment in that the assistance electrode 13 is a movable electrode.

High-speed introduction device 300 shown in Fig. 14 includes: connection chamber 3 provided in insulative container 1; electrodes 11, 12 each disposed in connection chamber 3; assistance electrode 13 disposed to be electrically separated from electrodes 11, 12 at least before an introduction operation; and injector 4 combined with assistance electrode 13.

Short-circuit electrodes 11, 12 are fixedly disposed in connection chamber 3 so as to be electrically separated from each other. Assistance electrode 13 is disposed to be able to be electrically brought into and out of contact with short-circuit electrodes 11, 12. Hereinafter, assistance electrode 13 may be referred to as a movable electrode, and short-circuit electrodes 11, 12 may be referred to as electrical-conduction target electrodes or an electrical-conduction target electrode pair for the movable electrode.

Also in the present embodiment, assistance electrode 13 is provided with hole portion 17 to communicate injector 4 and connection chamber 3 with each other. Injector 4 injects charged particles 21, etc., into connection chamber 3 via hole portion 17 of assistance electrode 13.

Assistance electrode 13 serving as the movable electrode is, for example, an electrode that is capable of making a translational motion. Assistance electrode 13 is introduced between short-circuit electrodes 11, 12 when an electrical fault is detected. Then, assistance electrode 13 is brought into direct contact or the like with both short-circuit electrodes 11, 12, thereby attaining electrical conduction between short-circuit electrodes 11, 12. In a state before the introduction operation, assistance electrode 13 is disposed to be separated from each of short-circuit electrodes 11, 12 by an insulation distance or more. Further, assistance electrode 13 is preferably disposed at a position at which assistance electrode 13 can be brought into direct contact with each of short-circuit electrodes 11, 12 by the introduction operation. A reference symbol 19A in the figure represents a holding member to hold assistance electrode 13 at the above-described position in the state before the introduction operation. It should be noted that holding member 19A is preferably configured not to block the movement of assistance electrode 13 during the introduction operation (for example, after the movement is started) and configured to block movement of assistance electrode 13 in an opposite direction after the introduction operation is completed (for example, after the movement to the predetermined position is finished).

In the present example, injector 4 (in particular, in the example shown in the figure, insulative container 18 that constitutes a portion of the wall surface of pressure chamber 5) and assistance electrode 13 are not fixed to cover 2. Therefore, injector 4 and assistance electrode 13 are movable. In the example in the figure, insulative container 18 and assistance electrode 13 are moved along an extending direction (z axis direction in the figure) of each of ignition electrodes 81, 82 in response to pressure being increased in pressure chamber 5. This means that the movable electrode is driven to be moved by injector 4. In other words, driving force for the movable electrode is given from injector 4. More specifically, the movable electrode is driven by utilizing pressure change (pressing) used for the injection operation for charged particles 21, etc., in injector 4. In the present embodiment, when the introduction operation is started, injector 4 (more specifically, pressure chamber 5) not only injects charged particles 21, etc., into connection chamber 3 but also moves the movable electrode (assistance electrode 13) in a direction toward the electrical-conduction target electrodes (both short-circuit electrodes 11, 12 in the present example) or the space between the electrical-conduction target electrodes. It should be noted that in the example shown in the figure, by disposing ignition electrodes 81, 82 serving as the fixed electrodes at positions close to the inner wall of injector 4 (more specifically, pressure chamber 5) to such an extent that each of ignition electrodes 81, 82 touches the inner wall of injector 4, assistance electrode 13 serving as the movable electrode and insulative container 18 serving as a base therefor are moved in a direction along the extending direction of each of ignition electrodes 81, 82. Thus, by disposing the movable electrode combined with injector 4 and the portion combined therewith (hereinafter referred to as movable portion) and the fixed portion (hereinafter referred to as fixed portion) along each other, the direction of the movable portion is preferably controlled. Apart from ignition electrodes 81, 82 each serving as the fixed portion being disposed along the inner wall of pressure chamber 5 serving as the movable portion, another exemplary method of controlling the direction of the movable portion is as follows: the outer wall of pressure chamber 5 serving as the movable portion is disposed along the inner wall of insulative container 1 (more specifically, the inner wall of opening 31 of connection chamber 3) serving as the fixed portion.

The movable electrode may be moved until the movable electrode is brought into contact with the electrical-conduction target electrode. It should be noted that the movable electrode may not be necessarily moved until the movable electrode is physically brought into contact therewith, and the movable electrode may be moved to be close thereto until a distance between the movable electrode and each electrical-conduction target electrode becomes equal to or less than the insulation distance or until discharging path DP is formed between the movable electrode and each electrical-conduction target electrode, for example. The injection of charged particles 21, etc., by injector 4 is performed, for example, before the movable electrode is brought into contact with the electrical-conduction target electrode pair or before the distance between the movable electrode and each electrical-conduction target electrode becomes equal to or less than the insulation distance.

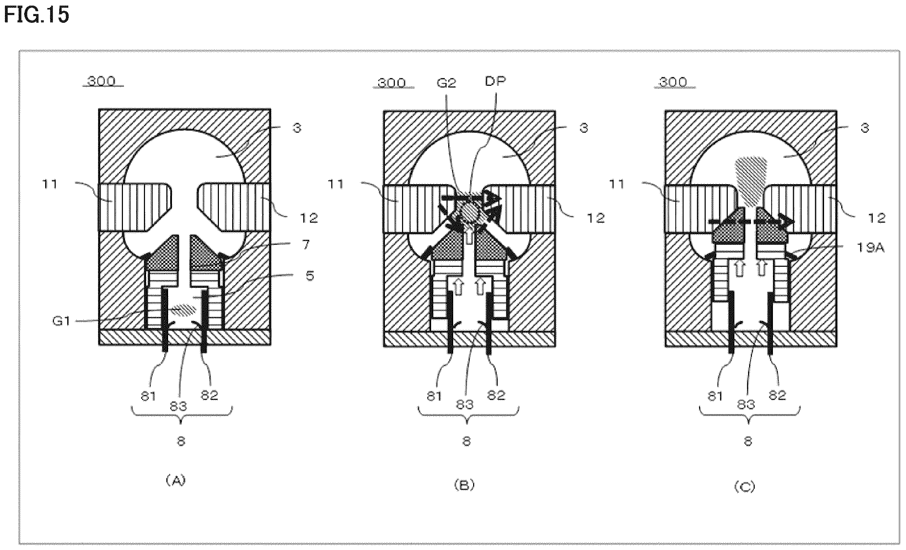

Next, the introduction operation for high-speed introduction device 300 according to the third embodiment will be described. Fig. 15 is an explanatory diagram showing an exemplary introduction operation for high-speed introduction device 300 according to the third embodiment. As shown in Fig. 15, in the normal state, short-circuit electrodes 11, 12 and assistance electrode 13 are separated from one another. When a fault current is detected and the introduction operation is started, injector 4 first generates charged particles 21 in pressure chamber 5 in high-speed introduction device 300 (see (A) in Fig. 15). Injector 4 may generate an arc together with charged particles 21.

When pressure in pressure chamber 5 is increased in response to the generation of charged particles 21 and the arc, injector 4 injects conductive gas G2 including charged particles 21 into connection chamber 3 via hole portion 17 of assistance electrode 13 (see white arrows in (B) in Fig. 15). When the pressure in pressure chamber 5 is increased by a certain amount or more in parallel with the injection operation for conductive gas G2, injector 4 including assistance electrode 13 is moved in the z axis direction in the figure (see the white arrows in (B) in Fig. 15). The white arrows in the figure show how conductive gas G2 (more specifically, the high-temperature gas including charged particles 21) in the form of plasma as generated in response to the generation of arc is released from hole portion 17 by the pressure being increased in pressure chamber 5, and how assistance electrode 13 is moved by injector 4. In the present example, assistance electrode 13 is moved in the direction toward each of the electrical-conduction target electrode pair (short-circuit electrode 11 and short-circuit electrode 12), and injector 4 allows conductive gas G2 to flow into connection chamber 3 via hole portion 17 of assistance electrode 13 that is being moved.

Conductive gas G2 having flowed into connection chamber 3 flows into not only a space between short-circuit electrode 11 and short-circuit electrode 12, but also a space between short-circuit electrode 11 and assistance electrode 13 and a space between short-circuit electrode 12 and assistance electrode 13, thereby causing dielectric breakdown and increased spatial electric conductivity in each of the spaces. As a result, discharging path DP is formed in the space to bring short-circuit electrodes 11, 12 into electrical conduction state with each other via assistance electrode 13 (see broken line arrows in (B) in Fig. 15). The broken line arrows in the figure indicate how the fault current is short-circuited by discharging path DP formed in each of these spaces. Thus, the short circuit is attained before assistance electrode 13 is brought into contact with short-circuit electrodes 11, 12, with the result that the fault current can be bypassed promptly.

When assistance electrode 13 is brought into contact with short-circuit electrodes 11, 12 after a while, a short-circuit circuit is securely formed, thereby completing the operation of high-speed introduction device 300 (see (C) in Fig. 15). A broken line arrow in the figure indicates how the fault current is short-circuited by the direct contact between short-circuit electrodes 11, 12. It should be noted that depending on a circuit configuration, the fault current may flow in an opposite direction.

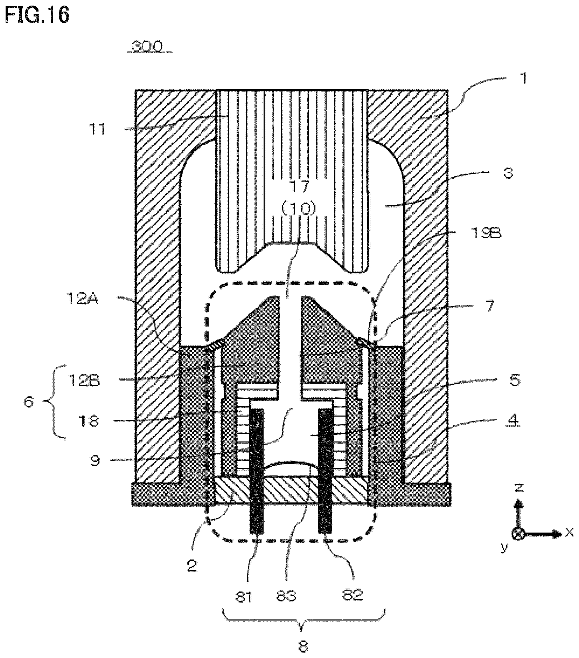

Fig. 16 is a cross sectional view showing another exemplary high-speed introduction device 300 according to the third embodiment. High-speed introduction device 300 shown in Fig. 16 is different from high-speed introduction device 201 which serves as modification 2-1 of the second embodiment and in which injector 4 is combined with one of the short-circuit electrodes shown in Fig. 12, in that the short-circuit electrode is a movable electrode. High-speed introduction device 300 shown in Fig. 16 includes: connection chamber 3 provided in insulative container 1; electrodes 11, 12 each disposed in connection chamber 3; and injector 4 that communicate with inside of connection chamber 3 with injector 4 being combined with one of electrodes 11, 12.

Also in the present example, one of short-circuit electrodes 11, 12 (short-circuit electrode 12 in the present example) is provided with hole portion 17 that communicates injector 4 and connection chamber 3 with each other. Accordingly, injector 4 injects charged particles 21, etc., into connection chamber 3 via hole portion 17 of the one of the electrodes.

Injector 4 may have an electrode (12B in the figure) composed of a conductive material at its tip portion and may be combined with short-circuit electrode 12 with the electrode being movably connected to an electrode (12A in the figure) drawn to the outside as short-circuit electrode 12 while maintaining an electrical conduction state therewith, for example. Further, injector 4 may be combined with short-circuit electrode 12 with the electrically conductive tip portion (12B in the figure) being movably accommodated in the electrode (12B in the figure) drawn to the outside as short-circuit electrode 12 while maintaining the electrical conduction state therewith, for example. As a method of moving the electrode while maintaining the electrical conduction state, an existing technique can be used.

It should be noted that in the present example, in the above-described conductive member constituting short-circuit electrode 12 combined with injector 4, the portion (12A in the figure) fixed to insulative container 1 and drawn to the outside can be regarded as a main electrode of short-circuit electrode 12, and the portion (12B in the figure) disposed to be movable while maintaining the electrical conduction state with the main electrode can be regarded as assistance electrode 13 that is movable. In the description below, in the portions constituting short-circuit electrode 12 combined with injector 4, the portion fixed to insulative container 1 and drawn to the outside will be referred to as a main electrode 12A or a fixed electrode 12A, the portion disposed to be movable while maintaining the electrical conduction state with main electrode 12A serving as the fixed electrode will be referred to as assistance electrode 12B or movable electrode 12B, and a combination of the portions will be referred to as short-circuit electrode 12 or movable short-circuit electrode 12.

In the present embodiment, assistance electrode 12B serving as the movable electrode included in short-circuit electrode 12 is, for example, an electrode that is capable of making a translational motion. When an electrical fault is detected, assistance electrode 12B is introduced in a direction toward the other short-circuit electrode 11 while maintaining the connection state with main electrode 12A. Then, assistance electrode 12B is brought into direct contact or the like with short-circuit electrode 11, thereby attaining electrical conduction between short-circuit electrodes 11, 12. In a state before the introduction operation, each of main electrode 12A and movable electrode 12B of short-circuit electrode 12 is disposed to be separated, by an insulation distance or more, from short-circuit electrode 11 serving as the target for electrical conduction. Further, assistance electrode 12B thereof is preferably disposed at a position at which assistance electrode 12B can be brought into direct contact with short-circuit electrode 11 serving as the target for electrical conduction by the introduction operation.

A reference symbol 19B in the figure represents a holding member to hold assistance electrode 12B at the above-described position while maintaining the electrical conduction state with main electrode 12A in the state before the introduction operation. It should be noted that holding member 19B is preferably configured not to block the movement of assistance electrode 12B after the introduction operation (for example, after the movement is started) and configured to block movement of movable electrode 12B in an opposite direction after the introduction is completed (for example, after the movement to the predetermined position is finished) while maintaining the connection state with main electrode 12A. It should be noted that movable electrode 12B may be provided with a notch or the like that engages with holding member 19B when movable electrode 12B is moved to the predetermined position.

Also in the present example, injector 4 (in particular, in the example shown in the figure, insulative container 18 constituting a portion of the wall surface of pressure chamber 5) and assistance electrode 12B are not fixed to cover 2. Therefore, injector 4 and assistance electrode 12B are movable. In the example shown in the figure, insulative container 18 and assistance electrode 12B are moved along an extending direction (z axis direction in the figure) of each of ignition electrodes 81, 82 in response to pressure being increased in pressure chamber 5. In the present embodiment, when the introduction operation is started, injector 4 (more specifically, pressure chamber 5) not only injects charged particles 21, etc., into connection chamber 3 but also moves the movable electrode (assistance electrode 12B) in the direction toward the electrical-conduction target electrode (short-circuit electrode 11). The other points are the same as those in the example shown in Fig. 14.

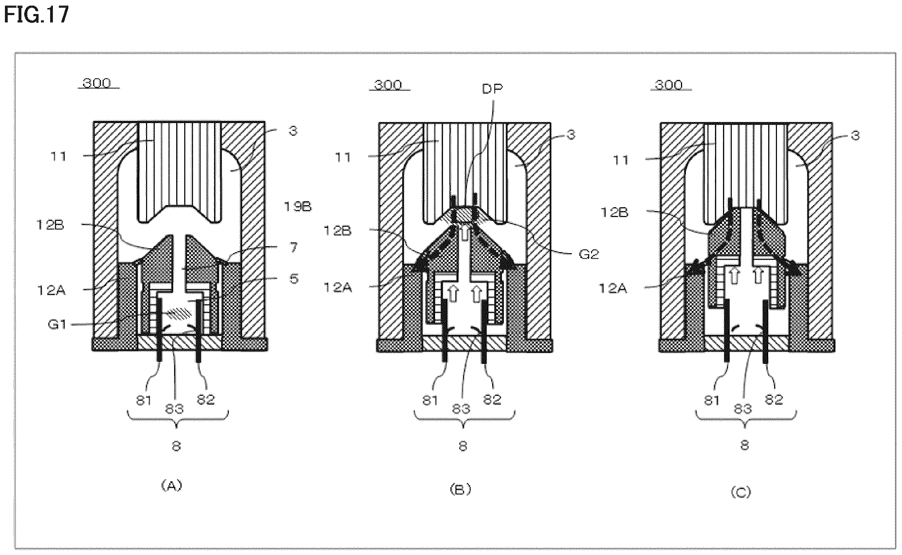

Next, the introduction operation for high-speed introduction device 300 according to the present example will be described. Fig. 17 is an explanatory diagram showing another exemplary introduction operation for high-speed introduction device 300 shown in Fig. 16. As shown in Fig. 17, also in the present example, in the normal state, short-circuit electrode 11 and main electrode 12A and assistance electrode 12B of short-circuit electrode 12 are separated from one another. When a fault current is detected and the introduction operation is started, injector 4 first generates charged particles 21 in pressure chamber 5 in high-speed introduction device 300 (see (A) in Fig. 15). Injector 4 may generate an arc together with charged particles 21.

When pressure in pressure chamber 5 is increased in response to the generation of the arc and charged particles 21, injector 4 injects conductive gas G2 including charged particles 21 into connection chamber 3 via hole portion 17 of assistance electrode 12B (see white arrows in (B) in Fig. 17). When the pressure in pressure chamber 5 is increased by a certain amount or more in parallel with the injection operation for conductive gas G2, injector 4 including assistance electrode 12B is moved in the z axis direction in the figure (see the white arrows in (B) in Fig. 17). The white arrows in the figure indicate how conductive gas G2 (more specifically, the high-temperature gas including charged particles 21) in the form of plasma as generated in response to the generation of arc is released from hole portion 17 by the pressure being increased in pressure chamber 5, and how assistance electrode 12B is moved by injector 4. In the present example, assistance electrode 12B of short-circuit electrode 12 is moved in the direction toward short-circuit electrode 11 serving as the target for electrical conduction, and injector 4 allows conductive gas G2 to flow into connection chamber 3 via hole portion 17 of assistance electrode 12B that is being moved.

Conductive gas G2 having flowed into connection chamber 3 particularly flows into the space between short-circuit electrode 11 and assistance electrode 12B, thereby causing dielectric breakdown and increased spatial electric conductivity in the space. As a result, discharging path DP is formed between short-circuit electrode 11 and assistance electrode 12B, and short-circuit electrodes 11, 12 are brought into electrical conduction state via assistance electrode 12B (see broken line arrows in (B) in Fig. 17). The broken line arrows in the figure indicate how the fault current is short-circuited by discharging path DP. Thus, the short circuit is attained before assistance electrode 12B is brought into direct contact with short-circuit electrode 11, with the result that the fault current can be bypassed promptly.

When assistance electrode 12B is brought into contact with short-circuit electrode 11 after a while, a short-circuit circuit is securely formed, thereby completing the operation of high-speed introduction device 300 (see (C) in Fig. 17). Broken line arrows in the figure indicate how the fault current is short-circuited by the direct contact between short-circuit electrode 11 and assistance electrode 12B. It should be noted that depending on a circuit configuration, the fault current may flow in an opposite direction.

As described above, according to the high-speed introduction device of the present embodiment, in addition to the effect of the second embodiment, since injector 4 is combined with the movable electrode, the direct contact between the movable electrode and the main electrode can be assisted while promoting the formation of discharging path DP between the short-circuit electrodes or between the short-circuit electrode and the movable electrode by the injection of charged particles 21, etc., with the result that the short-circuit electrodes can be electrically connected to each other at a higher speed and more securely. As a result, since the fault current can be removed at a higher speed and more securely, an arc time in an external circuit can be reduced more safely to result in reduced scale of failure, improved reliability of the device as a whole, and simplified explosion prevention structure.

Further, by combining the movable electrode with injector 4, it is not necessary to additionally provide an opening or the like in connection chamber 3 for the sake of injector 4, thereby attaining a small size of the high-speed introduction device. In particular, by incorporating injector 4 into one of the short-circuit electrodes, it is not necessary to additionally provide a movable electrode (such as an additional movable electrode or the like which orients in the vertical direction as shown in Fig. 14) in addition to the short-circuit electrodes, thereby attaining a reduced space.

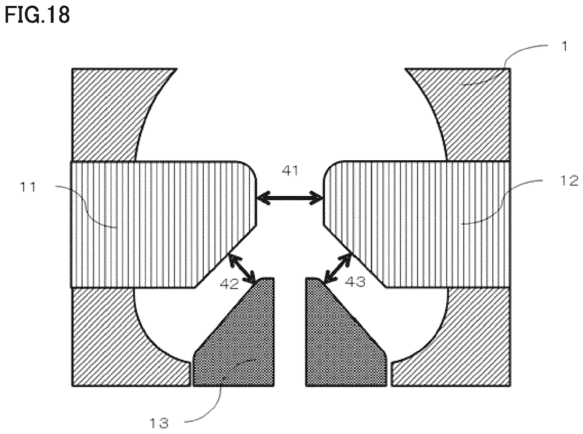

Fig. 18 is an explanatory diagram showing a main portion of high-speed introduction device 200 according to the third embodiment. In the case where the movable electrode (assistance electrode 13) is provided in addition to short-circuit electrodes 11, 12, i.e., in the case where the movable electrode is not grounded and serve as a floating electrode, a positional relation among the electrodes before the introduction operation may be as follows. That is, at least one of a second inter-electrode distance 42 and a third inter-electrode distance 43 may be equal to or less than a first inter-electrode distance 41 when first inter-electrode distance 41 represents a minimum distance between the fixed short-circuit electrodes, second inter-electrode distance 42 represents a minimum distance between one fixed short-circuit electrode and the movable electrode, and third inter-electrode distance 43 represents a minimum distance between the other fixed short-circuit electrode and the movable electrode. With this, the insulation distance in the case where the fixed short-circuit electrodes are brought into electrical conduction with each other via the movable electrode can be shortened as compared with the case where dielectric breakdown is caused only between fixed short-circuit electrodes 11, 12, thereby reducing a time required for the introduction. As an example, when the insulation distance is set such that the total of second inter-electrode distance 42 and third inter-electrode distance 43 is equal to first inter-electrode distance 41, each of the second and third inter-electrode distances (42, 43) can be substantially the half of first inter-electrode distance 41, with the result that the introduction distance for the movable electrode can be the half.

It should be noted that such a relation among the inter-electrode distances can also be applied, for example, to the configuration in which fixed assistance electrode 13 is included in high-speed introduction device 200 according to the second embodiment as shown in each of Figs. 8 and 9. That is, the positional relation among the electrodes may be as follows. That is, at least one of second inter-electrode distance 42 and third inter-electrode distance 43 may be equal to or less than first inter-electrode distance 41 when first inter-electrode distance 41 represents a minimum distance between the fixed short-circuit electrodes, second inter-electrode distance 42 represents a minimum distance between one fixed short-circuit electrode and the fixed assistance electrode, and third inter-electrode distance 43 represents a minimum distance between the other fixed short-circuit electrode and the fixed assistance electrode. Also in such a case, the insulation distance in the case where the fixed short-circuit electrodes are brought into electrical conduction with each other via the fixed assistance electrode can be shortened as compared with the case where dielectric breakdown is caused only between fixed short-circuit electrodes 11, 12, thereby reducing a time required for the introduction.

### (Modification 3-1)

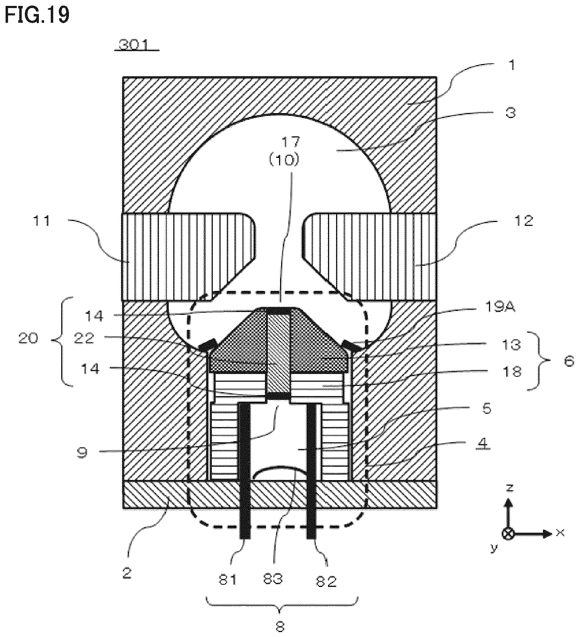

Fig. 19 is a cross sectional view showing an exemplary high-speed introduction device 301 according to a modification 3-1 of the third embodiment. High-speed introduction device 301 shown in Fig. 19 is different from high-speed introduction device 300 of the third embodiment shown in Fig. 14 in that conductive particles 22 are stored in communication path 7. In other words, injector 4 has storage portion 20 to store conductive particles 22 inside communication path 7.

Storage portion 20 may be the same as that shown in modification 1-1. It should be noted that in injector 4 combined with the movable electrode, it is more preferable that conductive particles 22 stored in storage portion 20 are sufficiently lighter in weight than the weight of the movable electrode. As conductive particles 22, for example, metal particles are suitable.

The other configurations or the like of injector 4 may be the same as those of modification 1-1. For example, in the present modification, charged-particle generation unit 8 also functions as a pressure adjustment mechanism to adjust the internal pressure of pressure chamber 5 by external control (application of voltage to each of ignition electrodes 81, 82). It should be noted that in the present example, the pressure adjustment mechanism may be other than charged-particle generation unit 8.

As described above, according to the high-speed introduction device of the present modification, in addition to the effect of the third embodiment, since injector 4 can inject conductive particles 22 into connection chamber 3 during the introduction operation to promote the formation of discharging path DP between short-circuit electrodes 11, 12, discharging path DP can be more securely formed.

### (Modification 3-2)

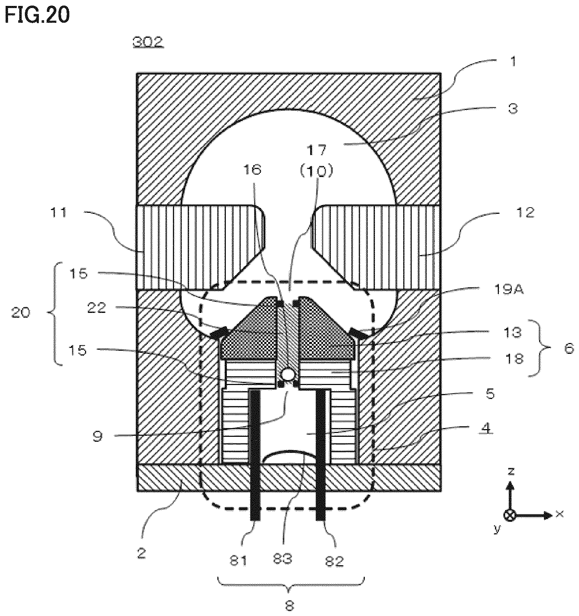

Fig. 20 is a cross sectional view showing an exemplary high-speed introduction device 302 according to a modification 3-2 of the third embodiment. High-speed introduction device 302 shown in Fig. 20 is different from modification 3-1 in that the pair of valve seats 15 fixed to communication path 7 and sealing body 16 inserted in the region surrounded by valve seats 15 are included as the configuration of storage portion 20.

The configuration of injector 4 including valve seats 15 and sealing body 16 may be the same as that of modification 1-2 described above. For example, also in the present modification, valve seats 15 and partitions 14 can be combined.

In each of the example of the third embodiment and the example of modification 3-1, connection chamber 3 and pressure chamber 5 communicate with each other even after charged particles 21, etc., are released. Since conductive gas G2 released from pressure chamber 5 can enter and exit via hole portion 17, a contact pressure for pressing the movable electrode (assistance electrode 13, assistance electrode 12B) against the electrical-conduction target electrode may be decreased when the pressure in pressure chamber 5 is deceased too much.

To address this, in the present modification, as with modification 1-2, sealing body 16 is inserted into communication path 7 (provided with hole portion 17 in the present modification) so as to seal communication path 7. Thus, communication path 7 can be sealed after charged particles 21, etc., are released during the introduction operation. Also when partition 14 is provided, even after partition 14 is fractured, communication path 7 can be closed by a pressure difference between connection chamber 3 and pressure chamber 5, thereby preventing excessive decrease of pressure in pressure chamber 5. That is, when the pressure in injector 4 is used as driving force for the movable electrode, decrease of the pressure can be prevented.

As described above, according to the high-speed introduction device of the present modification, in addition to the effect of modification 3-1 described above, since injector 4 includes a mechanism that can prevent, after completion of the introduction, decrease of pressure that serves as the driving force for the movable electrode and that also serves as a contact pressure with the electrical-conduction target electrode, electrical conduction can be attained in the short-circuit circuit (more specifically, between short-circuit electrodes 11, 12) more securely at a high speed.

It should be noted that each of the configurations according to modification 3-1 and modification 3-2 can be applied to a high-speed introduction device (for example, high-speed introduction device 300 shown in Fig. 15) other than exemplary high-speed introduction device 300 of the third embodiment shown in Fig. 14.

### Fourth Embodiment.

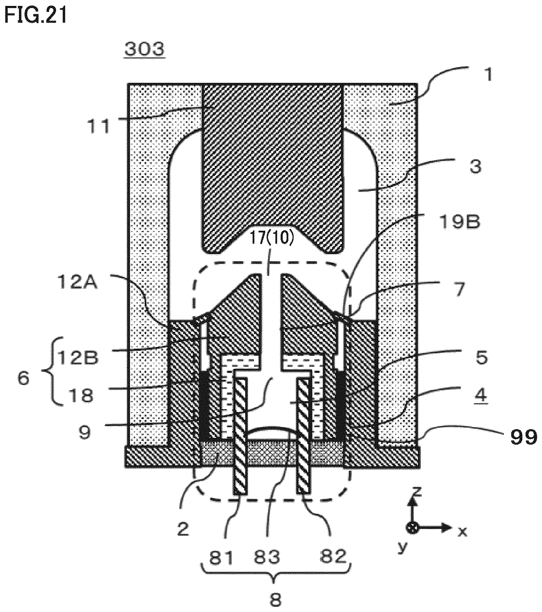

A high-speed introduction device according to a fourth embodiment has basically the same configuration as that of the other example (Fig. 16) of the third embodiment, and further includes a slidable portion 99. Fig. 21 is a cross sectional view showing an exemplary high-speed introduction device 303 according to the fourth embodiment.

High-speed introduction device 303 has a configuration provided with slidable portion 99 to electrically connect main electrode 12A and assistance electrode 12B to each other. Slidable portion 99 can be realized, for example, by winding, around assistance electrode 12B, a ring-shaped spring composed of a conductive material. When assistance electrode 12B is driven in the direction of short-circuit electrode 11, assistance electrode 12B can be prevented from being displaced in position to the left or right in the plane of sheet due to extension or contraction of the spring. Further, since slidable portion 99 is inserted between short-circuit electrode 12A and assistance electrode 12B, a clearance is less likely to be formed. Thus, electrical resistance of the contact surface can be reduced, thereby attaining electrical conduction between short-circuit electrodes 11, 12A securely.

### Fifth Embodiment.

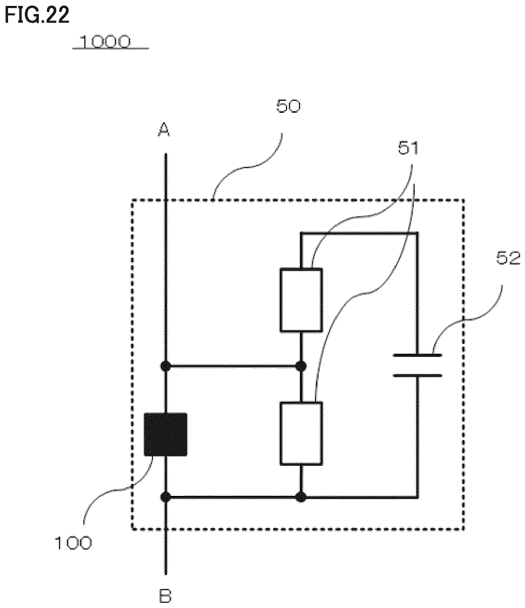

Next, an application of each of the above-described high-speed introduction devices will be described. Fig. 22 is a configuration diagram showing an exemplary circuit of a power conversion device 1000 according to a fifth embodiment. Here, high-speed introduction device 100 illustrated in the first embodiment will be described as the high-speed introduction device applied to power conversion device 1000; however, any of the high-speed introduction devices according to the above-described embodiments and modifications can be applied. The example shown in Fig. 22 represents a power module circuit 50 of power conversion device 1000 to convert from AC power to DC power and from DC power to AC power. Terminals A, B connected to power module circuit 50 in the figure are each connected to an upper-level system of power conversion device 1000. Power module circuit 50 includes semiconductor switches 51, and an electrical energy storage device 52 connected to each of semiconductor switches 51 in parallel, and high-speed introduction device 100 is connected to semiconductor switch 51 in parallel. In the example shown in the figure, high-speed introduction device 100 is connected between an input terminal and an output terminal of predetermined power module circuit 50.

Generally, an IGBT (Insulated Gate Bipolar Transistor), a thyristor, or the like is used as semiconductor switch 51. A capacitor is used as the electrical energy storage device.

When an abnormality occurs in power module circuit 50 due to a failure of semiconductor switch 51 or the like, high-speed introduction device 100 is introduced to short-circuit terminals A, B, thereby preventing the failure of power module circuit 50 from affecting the upper-level system. Further, by providing redundancy in the number of power module circuits 50, the operation of the power conversion device can be continued even when a failed power module circuit 50 is disconnected.

Failure of semiconductor switch 51 may involve an arc. Since the arc causes high temperature and high pressure, a member in power conversion device 1000 is more likely to be broken as a time of generation of arc is longer. Therefore, a failed circuit can be electrically disconnected from the upper-level system by introducing high-speed introduction device 100 to short-circuit terminals A, B. Since power conversion device 1000 according to the present embodiment includes the high-speed introduction device allowing for the introduction operation at a higher speed, the time of generation of arc can be shortened, with the result that explosion prevention performance of the power conversion device can also be improved.

### Sixth Embodiment.

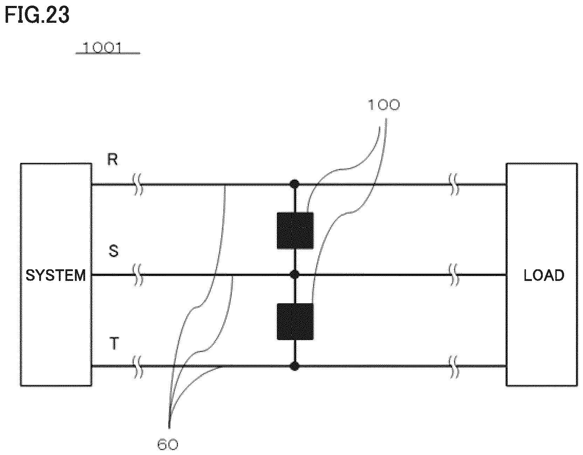

Next, another application of each of the above-described high-speed introduction devices will be described. Fig. 23 is a schematic diagram showing an exemplary circuit of a switchgear 1001 according to a sixth embodiment. Here, high-speed introduction device 100 illustrated in the first embodiment will be described as the high-speed introduction device applied to switchgear 1001; however, any of high-speed introduction devices according to the above-described embodiments and modifications can be applied. In the example shown in Fig. 23, high-speed introduction devices 100 are connected between phases R-S and between phases S-T of a bus 60 constituted of an R phase, an S phase, and a T phase.

In the present example, in the normal state, each of high-speed introduction devices 100 is in an opened state. When a short-circuit fault occurs between the phases, a high-temperature and high-pressure arc is generated in the atmosphere. Since pressure inside switchgear 1001 is abruptly increased by the arc, switchgear 1001 is severely damaged in the worst case. Therefore, by introducing high-speed introduction device 100 connected between the phases, a fault current can be bypassed at a higher speed. Thus, a time of generation of arc can be suppressed at the time of an arc fault inside switchgear 1001. As a result, an influence of the short-circuit fault between the phases can be reduced, thereby providing switchgear 1001 having high reliability.

### REFERENCE SIGNS LIST

100, 101, 102, 200, 201, 300, 301, 302 303: high-speed introduction device
1: insulative container
2: cover
3: connection chamber (arc space)
31: opening
4: injector
5: pressure chamber
6: nozzle
7: communication path
8: charged-particle generation unit
81, 82: ignition electrode
83: fuse
9: opening
10: injection port
11, 12: electrode (short-circuit electrode)
12A: main electrode
12B: assistance electrode
13: assistance electrode
14: partition
15: valve seat
16: sealing body
17: hole portion
18: insulative container
19A, 19B: holding member
20: storage portion
21: charged particle
22: conductive particle
1000: power conversion device
50: power module circuit
51: semiconductor switch
52: electrical energy storage device
1001: switchgear
60: bus
99: swingable portion

## Claims

1. A high-speed introduction device comprising:
a connection chamber provided in an insulative container;
a first electrode and a second electrode disposed to be electrically separated from each other in the connection chamber at least before an introduction operation, each of the first electrode and the second electrode being composed of a conductive material; and
an injector to inject at least one of a charged particle and a conductive particle, the injector communicating with the connection chamber, wherein
when the introduction operation is started, the injector injects at least one of the charged particle and the conductive particle into the connection chamber.

2. The high-speed introduction device according to claim 1, wherein
the injector has
a charged-particle generation unit to generate the charged particle,
a nozzle to form a communication path that connects the connection chamber and a space in which the charged-particle generation unit is accommodated, and
when the introduction operation is started, the injector injects the charged particle into the connection chamber via the communication path.

3. The high-speed introduction device according to claim 2, wherein
the conductive particle is stored in the communication path, and
when the introduction operation is started, the injector injects the conductive particle together with the charged particle into the connection chamber.

4. The high-speed introduction device according to claim 1, wherein
the injector has
a pressure chamber having an internal pressure that is adjustable by external control, and
a nozzle to form a communication path that connects the pressure chamber and the connection chamber,
the conductive particle is stored in the communication path, and
when the introduction operation is started, the injector injects the conductive particle into the connection chamber via the communication path.

5. The high-speed introduction device according to claim 4, comprising, as an internal pressure adjustment mechanism for the pressure chamber, a charged-particle generation unit to generate the charged particle, wherein
when the introduction operation is started, the injector injects the conductive particle together with the charged particle into the connection chamber.

6. The high-speed introduction device according to any one of claims 2, 3 or 5, wherein
the charged-particle generation unit includes an arc electrode pair to generate an arc, and the charged particle is generated by a current flowing through the arc electrode pair.

7. The high-speed introduction device according to any one of claims 2 to 6, wherein an openable/closeable partition is provided in the communication path.

8. The high-speed introduction device according to claim 7, wherein the openable/closeable partition includes a sealing body movable in the communication path, and a valve seat to support the sealing body in the communication path.

9. The high-speed introduction device according to any one of claims 1 to 8, comprising a third electrode disposed to be electrically separated from the first electrode and the second electrode at least before the introduction operation, the third electrode being composed of a conductive material, wherein
the third electrode is provided with a hole portion that communicates with the connection chamber, and
when the introduction operation is started, the injector injects at least one of the charged particle and the conductive particle into the connection chamber via the hole portion.

10. The high-speed introduction device according to claim 9, wherein in a state before the introduction operation, at least one of a second inter-electrode distance and a third inter-electrode distance is equal to or less than a first inter-electrode distance, when
the first inter-electrode distance represents a minimum distance between the first electrode and the second electrode,
the second inter-electrode distance represents a minimum distance between the first electrode and the third electrode, and
the third inter-electrode distance represents a minimum distance between the second electrode and the third electrode.

11. The high-speed introduction device according to any one of claims 1 to 8, wherein
one electrode of the first electrode and the second electrode is provided with a hole portion that communicates with the connection chamber, and
when the introduction operation is started, the injector injects at least one of the charged particle and the conductive particle into the connection chamber via the hole portion.

12. The high-speed introduction device according to any one of claims 9 to 11, wherein
the electrode provided with the hole portion is a movable electrode that is able to be electrically brought into and out of contact with an electrical-conduction target electrode, and
when the introduction operation is started, the movable electrode is moved in a direction toward the electrical-conduction target electrode, and the injector injects at least one of the charged particle and the conductive particle into the connection chamber via the hole portion.

13. The high-speed introduction device according to claim 12, wherein the movable electrode is driven to be moved by the injector.

14. The high-speed introduction device according to claim 12 or 13, wherein
the movable electrode is moved until the movable electrode is brought into contact with the electrical-conduction target electrode, and at least one of the charged particle and the conductive particle is injected by the injector before the movable electrode is brought into contact with the electrical-conduction target electrode.

15. The high-speed introduction device according to any one of claims 12 to 14, wherein
when the introduction operation is started, the movable electrode is moved in the direction toward the electrical-conduction target electrode, and the injector injects the charged particle and the conductive particle into the connection chamber via the hole portion.

16. The high-speed introduction device according to any one of claims 9 to 15, wherein the injector is accommodated inside the electrode provided with the hole portion.

17. The high-speed introduction device according to any one of claims 12 to 15, comprising a slidable portion to electrically connect the movable electrode and a fixed electrode that is fixed to the insulative container and that is drawn to outside of the movable electrode.

18. A power conversion device comprising:
a power semiconductor circuit having a semiconductor switch and an electrical energy storage device connected to the semiconductor switch in parallel; and
the high-speed introduction device according to any one of claims 1 to 17, wherein
the high-speed introduction device is connected between an input terminal and an output terminal of the power semiconductor circuit.

19. A switchgear comprising:
a bus; and
the high-speed introduction device according to any one of claims 1 to 17, wherein
the high-speed introduction device is provided in the bus.
